(19) Europäisches Patentamt
European Patent Office
Office européen des brevets

(11) **EP 4 696 739 A1**

(12) **EUROPEAN PATENT APPLICATION**
published in accordance with Art. 153(4) EPC

(43) Date of publication:
**18.02.2026 Bulletin 2026/08**

(51) International Patent Classification (IPC):
**C08J 5/18** (2006.01)     **B29C 55/06** (2006.01)
**B32B 15/09** (2006.01)     **B65D 65/40** (2006.01)

(21) Application number: 24811003.3

(52) Cooperative Patent Classification (CPC):
**B29C 55/06; B32B 15/09; B65D 65/40; C08J 5/18**

(22) Date of filing: **15.05.2024**

(86) International application number:
**PCT/JP2024/018026**

(87) International publication number:
**WO 2024/241996 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.05.2023   JP 2023084382**

(71) Applicant: JFE Steel Corporation
Tokyo, 100-0011 (JP)

(72) Inventors:
• **INAMORI Tatsuki**
**Tokyo 100-0011 (JP)**
• **FUJIMOTO Soichi**
**Tokyo 100-0011 (JP)**
• **YAMANAKA Yoichiro**
**Tokyo 100-0011 (JP)**

(74) Representative: **Haseltine Lake Kempner LLP
One Portwall Square
Portwall Lane
Bristol BS1 6BH (GB)**

(54) **POLYESTER FILM, PRODUCTION METHOD FOR POLYESTER FILM, LAMINATE METAL PLATE, PRODUCTION METHOD FOR LAMINATE METAL PLATE, AND LAMINATE METAL CONTAINER**

(57)     Provided are a polyester film and the like that can be stably manufactured with low energy consumption at any stage of the manufacturing process of the film, a laminated metal sheet, and a laminated metal container, and whose film appearance does not deteriorate particularly even after a high-temperature sterilization process. The polyester film contains a first polyester and a second polyester. The first polyester is polyethylene terephthalate or a polyethylene terephthalate copolymer of polyethylene terephthalate and a copolymer component. The second polyester is polybutylene terephthalate or a polyethylene terephthalate copolymer of polybutylene terephthalate and a copolymer component. The ratio of the first polyester to the second polyester is from 20:80 to 50:50 on a mass% basis, and the net intensities in the pole figures satisfy predetermined conditions.

FIG. 1

EP 4 696 739 A1

**Description**

Technical Field

The present invention relates to a polyester film used for laminated metal sheets, a method for manufacturing the polyester film, a laminated metal sheet, a method for manufacturing the laminated metal sheet, and a laminated metal container.

Background Art

Metal sheets composed of tin-free steel (TFS), aluminum, or other metals are used as materials for metal containers, such as food cans, beverage cans, and 18L cans. These metal sheets are coated and baked to impart corrosion resistance, durability, weather resistance, and other properties.

Baking metal sheets is a complex and time-consuming process. Coating metal sheets involves the emission of a large amount of solvent. Therefore, laminated metal sheets, in which a metal sheet is laminated with a thermoplastic resin film, have been used as an alternative to coated metal sheets.

Polypropylene (PP), polyethylene terephthalate (PET), polybutylene terephthalate (PBT), and other materials are used for thermoplastic resin films for laminated metal sheets.

These thermoplastic resin films are required to exhibit adhesion to metal sheets during formation of laminated metal sheets, corrosion resistance, container formability in forming the laminated metal sheets into containers, and other properties.

Laminated metal containers formed from laminated metal sheets are also used for food cans. Such laminated metal containers are subjected to high-temperature sterilization processes, such as a retort sterilization process. Thermoplastic resin films may form fine bubbles inside them when placed in a high-temperature sterilization environment. Since bubbles scatter light, thermoplastic resin films containing bubbles appear cloudy and impair their appearance, which is problematic.

Various attempts have been made to prevent or reduce the discoloration of such thermoplastic resin films. For example, Patent Literature 1 and Patent Literature 2 disclose biaxially stretched polyester films containing a polyethylene terephthalate-based polyester and a polybutylene terephthalate-based polyester in a specific ratio.

By the way, polyester film manufacturing methods can be classified by stretching type into a non-stretching method and longitudinal uniaxial stretching, transverse uniaxial stretching, sequential biaxial stretching, simultaneous biaxial stretching, and multi-stage stretching methods including re-longitudinal stretching and the like.

An advantage of the non-stretching method is that the equipment is less expensive than those for other stretching methods. Disadvantages of the non-stretching method include lower productivity and less accurate thickness of the produced polyester films than those in other stretching methods.

An advantage of longitudinal uniaxial stretching is that the equipment is relatively inexpensive than those for other stretching methods. A disadvantage of longitudinal uniaxial stretching is that uniaxial orientation causes anisotropy during formation of laminated metal containers.

Transverse uniaxial stretching offers no significant advantages for films for laminated metal containers. Disadvantages of transverse uniaxial stretching are that the equipment is relatively more expensive than those for other stretching methods, and uniaxial orientation causes anisotropy during formation of laminated metal containers.

Advantages of sequential biaxial stretching include higher productivity, more accurate thickness of the produced polyester films, and better in-plane isotropy of the produced polyester films than those in other stretching methods. A disadvantage of sequential biaxial stretching is that the equipment is more expensive than those for other stretching methods.

An advantage of simultaneous biaxial stretching is that the in-plane isotropy of the produced polyester films is better than that in other stretching methods. A disadvantage of simultaneous biaxial stretching is that the equipment is much more expensive than those for other stretching methods.

Multi-stage stretching offers no significant advantages for films for laminated metal containers. Disadvantages of multi-stage stretching, such as re-longitudinal stretching, are that the equipment is more expensive than those for other stretching methods and that it is unsuitable for polyester films for laminated metal containers since it enhances the orientation of polyester films.

In view of the above advantages and disadvantages, many of the thermoplastic resin films used for laminated metal containers are produced by sequential biaxial stretching.

The non-stretching method has also been selected to produce polyester films because it does not require a large heating furnace and is more energy-efficient than other stretching methods, in addition to having lower equipment costs. Such a polyester film is disclosed, for example, in Patent Literature 3.

From the same viewpoints, longitudinal uniaxial stretching has been selected to produce polyester films. Such a polyester film is disclosed, for example, in Patent Literature 4.

Citation List

Patent Literature

PTL 1: Japanese Unexamined Patent Application Publication No. 10-110046
PTL 2: Japanese Unexamined Patent Application Publication No. 6-155660
PTL 3: International Publication No. WO 2015/012222
PTL 4: Japanese Unexamined Patent Application Publication No. 2009-279902

Summary of Invention

Technical Problem

As described above, thermoplastic resin films are required to exhibit adhesion between metal sheets and the thermoplastic resin films before and after a high-temperature sterilization process, have resistance to discoloration when subjected to a high-temperature sterilization process, and have formability for forming containers from laminated metal sheets. Non-stretched films and longitudinally uniaxially stretched films have been proposed as energy-efficient polyester films that satisfy these requirements and eliminate the need for a large-scale heating furnace.

For the non-stretched polyester film disclosed in Patent Literature 3, however, only an extrusion coating method, in which a film extruded from the T-die of an extruder is directly laminated to a metal sheet by thermocompression bonding, is described as Example. As is apparent from the statement that the method involving coiling the extruded film once and then laminating the extruded film separately is inferior in terms of film thinning, productivity, and handling, it is practically difficult to achieve industrial production by using methods other than the extrusion coating method.

In the extrusion coating method, the laminating equipment and the extruder are operated in synchronization during production, and the production rate is limited by the extrusion rate from the T-die. Therefore, this extrusion coating method is less productive than the method in which a film extruded from a wide die and stretched in the transverse direction is slit and then laminated separately. Another issue is that changing the resin type in the extruder requires stopping the laminating equipment as well.

Patent Literature 4 discloses a method for manufacturing a polyester film in which longitudinal stretching is performed at a temperature 80°C to 100°C above the glass transition temperature of polybutylene terephthalate-based polyester, and internal stress is then reduced by tension relaxation without heat setting. However, longitudinal stretching at a temperature 30°C or more above the glass transition temperature tends to cause the softened polyester film to stick to the rolls, making stable production difficult.

The present invention has been accomplished in view of the above-mentioned problems. Specifically, the present invention is directed to a polyester film, a laminated metal sheet, and a laminated metal container whose film appearance does not deteriorate even after a high-temperature sterilization process, such as a retort sterilization process, which is necessary for food cans and beverage cans. The present invention is also directed to, for example, a method for manufacturing a laminated metal sheet by which stable manufacturing is achieved with low energy consumption at any stage of the manufacturing process of the film, the laminated metal sheet, and a laminated metal container. Solution to Problem

To solve the above problems, the present invention has the following features.

[1] A polyester film including: a first polyester containing polyethylene terephthalate as a component; and a second polyester containing polybutylene terephthalate as a component,

wherein the first polyester is polyethylene terephthalate or a polyethylene terephthalate copolymer of polyethylene terephthalate and a copolymer component,
the second polyester is polybutylene terephthalate or a polybutylene terephthalate copolymer of polybutylene terephthalate and a copolymer component,
a ratio of the first polyester to the second polyester is from 20:80 to 50:50 on a mass% basis, and
net intensities in pole figures satisfy formulas (1) and (2) below:
[Math. 1]

$$0.20 \leq I_{100}{}^{(60,0)}/I_{100}{}^{(60,90)} \leq 0.60 \quad \cdots \quad (1)$$

$$0.30 \leq I_{010}{}^{(50,0)}/I_{010}{}^{(50,90)} \leq 0.85 \quad \cdots \quad (2)$$

wherein, in X-ray diffraction measurement using Cu K$\alpha$ radiation, a diffraction peak appearing at $2\theta = 24.0 \pm 1.0°$ is attributed to (100) diffraction, and a diffraction peak appearing at $2\theta = 17.5 \pm 0.5°$ is attributed to (010) diffraction,

the pole figures are measured with $\alpha = 0°$ defined as a grazing angle at which a bisector of an angle between an incident X-ray and a reflected X-ray is parallel to a film plane, and

$\beta = 90°$ is defined as an in-plane rotation angle at which a maximum diffraction intensity is observed at $\alpha = 60°$ in the pole figure of the (100) diffraction,

$I_{100}{}^{(60,0)}$ is a net intensity at $\alpha = 60°$ and $\beta = 0°$ in a pole figure of intensity of the (100) diffraction,

$I_{100}{}^{(60,90)}$ is a net intensity at $\alpha = 60°$ and $\beta = 90°$ in the pole figure of intensity of the (100) diffraction,

$I_{010}{}^{(50,0)}$ is a net intensity at $\alpha = 50°$ and $\beta = 0°$ in a pole figure of intensity of the (010) diffraction, and

$I_{010}{}^{(50,90)}$ is a net intensity at $\alpha = 50°$ and $\beta = 90°$ in the pole figure of intensity of the (010) diffraction.

[2] The polyester film according to [1], wherein a sample standard deviation of a thickness measured in a direction of the incident X-ray at $\beta = 0°$ in the pole figures is 10% or less of an average film thickness.

[3] The polyester film according to [1] or [2], wherein the polyester film has at least one melting peak temperature in a range of 200°C to 230°C.

[4] A method for manufacturing a polyester film including a first polyester containing polyethylene terephthalate as a component and a second polyester containing polybutylene terephthalate as a component,

wherein the first polyester is polyethylene terephthalate or a polyethylene terephthalate copolymer of polyethylene terephthalate and a copolymer component,

the second polyester is polybutylene terephthalate or a polybutylene terephthalate copolymer of polybutylene terephthalate and a copolymer component,

the method including:

a non-stretched film forming step of extruding a resin composition containing the first polyester and the second polyester in a ratio of 20:80 to 50:50 on a mass% basis through a T-die using an extruder to obtain a non-stretched film; and

a longitudinally uniaxially stretched film forming step of longitudinally stretching the non-stretched film by using a longitudinal uniaxial stretching machine equipped with preheating rolls and a stretching roll to obtain a longitudinally uniaxially stretched film,

wherein, in the longitudinally uniaxially stretched film forming step, a stretch ratio in the longitudinal stretching is 3.0 or more and 7.0 or less, and a final preheating roll in the longitudinal stretching has a temperature of 40°C or higher and 80°C or lower.

[5] The method for manufacturing a polyester film according to [4], including:

a heat-setting step of performing heat-setting by heating the longitudinally uniaxially stretched film that has undergone the longitudinally uniaxially stretched film forming step,

wherein, in the heat-setting step, a temperature of the longitudinally uniaxially stretched film resulting from the heating is at least 5°C higher than the temperature of the final preheating roll during stretching and at least 50°C lower than a melting point of the polyester film.

[6] A method for manufacturing a polyester film including a first polyester containing polyethylene terephthalate as a component and a second polyester containing polybutylene terephthalate as a component,

wherein the first polyester is polyethylene terephthalate or a polyethylene terephthalate copolymer of polyethylene terephthalate and a copolymer component,

the second polyester is polybutylene terephthalate or a polybutylene terephthalate copolymer of polybutylene terephthalate and a copolymer component,

the method including:

a non-stretched film forming step of extruding a resin composition containing the first polyester and the second polyester in a ratio of 20:80 to 50:50 on a mass% basis through a T-die using an extruder to obtain a non-stretched film; and

a longitudinally uniaxially stretched film forming step of longitudinally stretching the non-stretched film by using a longitudinal uniaxial stretching machine equipped with preheating rolls and a stretching roll to obtain a longitudinally uniaxially stretched film,

wherein, in the longitudinally uniaxially stretched film forming step, a stretch ratio in the longitudinal stretching is 3.0 or more and 7.0 or less, and a stretching temperature in the longitudinal stretching is 50°C or higher and 80°C or lower.

[7] The method for manufacturing a polyester film according to [6], including:

a heat-setting step of performing heat-setting by heating the longitudinally uniaxially stretched film that has undergone the longitudinally uniaxially stretched film forming step,

wherein, in the heat-setting step, a temperature of the longitudinally uniaxially stretched film resulting from the heating is at least 5°C higher than the stretching temperature and at least 50°C lower than a melting point of the polyester film.

[8] A laminated metal sheet including the polyester film according to any one of [1] to [3] laminated to at least one of a top surface and a bottom surface of a metal sheet having the top surface and the bottom surface.

[9] The laminated metal sheet according to [8], wherein a wide-angle X-ray diffraction spectrum of the laminated metal sheet satisfies formula (3) below:

[Math. 2]

$$I_{100}{}^{(90,0)} / I_{amorphous}{}^{(90,0)} \leq 1.5 \quad \cdots \quad (3)$$

wherein the wide-angle X-ray diffraction spectrum is measured by a θ-2θ method using Cu Kα radiation at a sample angle of α = 90° and β = 0° in the pole figure,

$I_{100}{}^{(90,0)}$ is a net intensity of a (100) diffraction peak appearing at 2θ = 24.0 ± 1.0°, and

$I_{amorphous}{}^{(90,0)}$ is a net intensity of an amorphous halo appearing at 2θ = 20 ± 5°.

[10] A method for manufacturing the laminated metal sheet according to [8] or [9], including:

a thermocompression bonding step of laminating a preheated metal sheet and the polyester film together by thermocompression bonding using a laminating roll to form a thermocompression bonded body, and

a water-cooling step of cooling the thermocompression bonded body with water within 7 seconds after the thermocompression bonding,

wherein, in the thermocompression bonding step, the polyester film and the metal sheet are laminated together by thermocompression bonding after the metal sheet is preheated in a range of -20°C to +50°C relative to the melting point of the polyester film.

[11] A laminated metal container including the laminated metal sheet according to [8] or [9] as a material. Advantageous Effects of Invention

According to the present invention, there are provided a polyester film, a laminated metal sheet, and a laminated metal container whose film appearance does not deteriorate even after a high-temperature sterilization process, such as a retort sterilization process, which is necessary for food cans and beverage cans. There is also provided, for example, a method for manufacturing the laminated metal sheet by which the polyester film, the laminated metal sheet, and the laminated metal container can be stably manufactured with low energy consumption at any stage of the manufacturing process of the film, the laminated metal sheet, and the laminated metal container.

Brief Description of Drawings

[Fig. 1] Fig. 1 is a view for describing a laminated metal container.
[Fig. 2] Fig. 2 is a pole figure of the intensity of the (100) diffraction of a polyester film.
[Fig. 3] Fig. 3 is a pole figure of the intensity of the (010) diffraction of the polyester film.

[Fig. 4] Fig. 4 is a flow chart of the method for manufacturing the polyester film.

[Fig. 5] Fig. 5 is a flow chart of the method for manufacturing a laminated metal sheet.

Description of Embodiments

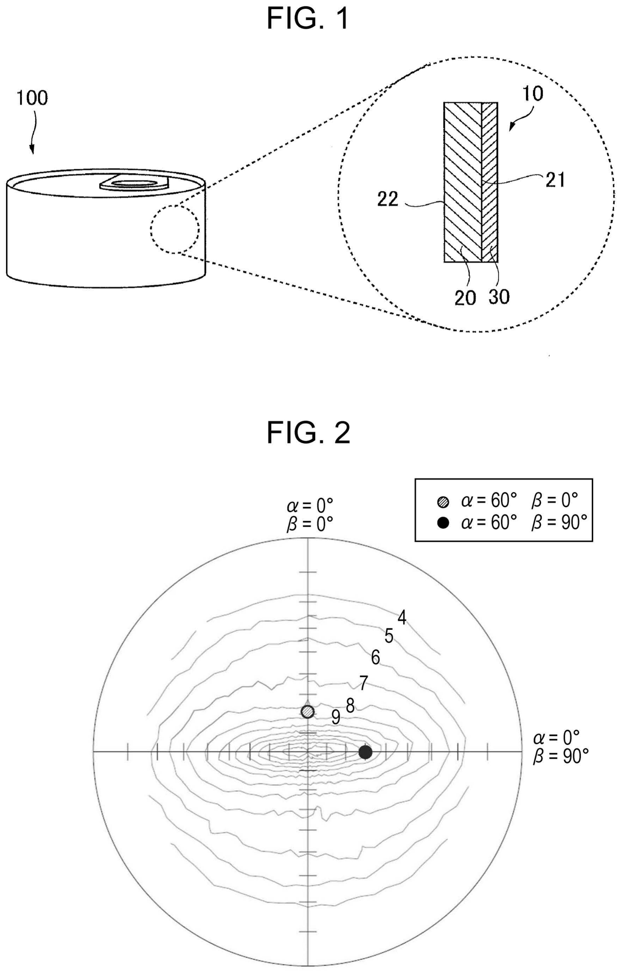

Embodiments of the present invention will be described below with reference to the drawings. Fig. 1 illustrates the structure of a laminated metal container. Referring to Fig. 1, a laminated metal container 100 is a bottomed container and has a lid that closes the container. The laminated metal container 100 is used, for example, for food cans, beverage cans, and 18L cans. The right side in Fig. 1 illustrates an enlarged cross-section of the wall of the laminated metal container 100.

The laminated metal container 100 is not limited, and may be either a three-piece can formed by joining three members (lid member, body member, and bottom member) or a two-piece can formed by joining two members (lid member and body member). The laminated metal container 100 is not limited to a can, but may, for example, have an opening on one end of the body member.

As illustrated in the enlarged cross-sectional view in Fig. 1, the laminated metal container 100 includes a laminated metal sheet 10 as a material. The laminated metal sheet 10 has a metal sheet 20 having a top surface 21, which is the outer wall of the laminated metal container 100, and a bottom surface 22, which is the inner wall of the laminated metal container 100. The laminated metal sheet 10 has a polyester film 30 laminated to at least one of the top surface 21 and the bottom surface 22 of the metal sheet 20. In Fig. 1, the polyester film 30 covers the top surface 21 of the metal sheet 20.

The metal sheet 20 is not limited but may be, for example, an aluminum sheet or a steel sheet, which has been widely used as a material for metal containers, and an aluminum or steel sheet subjected to various surface treatments. In particular, the metal sheet 20 is preferably a surface-treated steel sheet (TFS: Tin Free Steel) with a coating composed of metal chromium and hydrated chromium oxide.

The steel sheet used as a steel substrate of the TFS is not limited as long as the steel sheet can be formed into a shape corresponding to the laminated metal container 100. The steel sheet is preferably composed of low carbon steel, or a material obtained by subjecting IF (Interstitial Free) steel to recrystallization annealing and temper rolling or other rolling processes. The steel sheet used as a steel substrate of the TFS may have been subjected to overaging as necessary. The steel sheet used as a steel substrate of the TFS may have been subjected to secondary cold rolling.

For example, low carbon steel with a carbon content of 0.010 mass% or more and 0.10 mass% or less can be used. For example, an ultra-low carbon steel with a carbon content of 0.003 mass% or less and with added elements, such as Nb and Ti, can be used as IF steel. Examples of recrystallization annealing include continuous annealing, tight annealing, and open annealing.

The steel sheet used as a steel substrate of the TFS may have any mechanical properties as long as the steel sheet can be formed into a shape corresponding to the laminated metal container 100. For example, the yield point of the steel sheet is preferably in the range of 220 to 580 MPa, the Lankford value is preferably 0.8 or more, and the absolute value of in-plane anisotropy of the Lankford value is preferably 0.7 or less. The coating weight of the metal chromium layer or the hydrated chromium oxide layer in the TFS is not limited; however, from the viewpoints of film adhesion and corrosion resistance, the metal chromium layer is preferably in the range of 50 to 200 $mg/m^2$ in terms of Cr, and the hydrated chromium oxide layer is preferably in the range of 3 to 30 $mg/m^2$ in terms of Cr.

The sheet thickness of the metal sheet is not limited; however, from the viewpoint of formability into laminated metal containers and the strength required for metal containers, the sheet thickness of the metal sheet is preferably in the range of 0.10 to 0.35 mm.

The polyester film 30 contains a first polyester including polyethylene terephthalate as a component and a second polyester including polybutylene terephthalate as a component.

The first polyester can be polyethylene terephthalate or a copolymer of polyethylene terephthalate and a copolymer component. When the first polyester is a polyethylene terephthalate copolymer, the content of the copolymer component is preferably 15 mol% or less, more preferably 1 to 14 mol%, even more preferably 3 to 8 mol%.

Examples of the copolymer component of the first polyester include, as acid components, aromatic dicarboxylic acids, such as isophthalic acid, phthalic acid, naphthalenedicarboxylic acid, diphenyldicarboxylic acid, diphenyletherdicarboxylic acid, diphenylsulfonedicarboxylic acid, diphenoxyethanedicarboxylic acid, and 5-sodium sulfoisophthalic acid; aliphatic dicarboxylic acids, such as oxalic acid, succinic acid, adipic acid, suberic acid, sebacic acid, dimer acid, maleic acid, fumaric acid, dodecanedioic acid, and cyclohexanedicarboxylic acid; and their ester derivatives.

Examples of the copolymer component of the first polyester include, as alcohol components, propanediol, butanediol, pentanediol, hexanediol, neopentyl glycol, cyclohexanedimethanol, diethylene glycol, triethylene glycol, polyalkylene glycol, 2,2 bis(4-hydroxyethoxyphenyl)propane, isosorbide (1,4:3,6-dianhydroglucitol, 1,4:3,6-dianhydro-D-sorbitol), spiroglycol, bisphenol A, and bisphenol S.

The copolymer component of the first polyester may be one or two or more of the above components.

From the viewpoint of the formability of the polyester film 30 and the adhesion of the polyester film 30 to the metal sheet, isophthalic acid is preferably used as a copolymer component. When isophthalic acid is used as a copolymer component, the content of isophthalic acid in the copolymer is preferably 1 to 15 mol%, more preferably 3 to 14 mol%, even more preferably 3 to 8 mol%.

The intrinsic viscosity of the first polyester is preferably in the range of 0.65 to 1.00 dL/g. When the intrinsic viscosity is 0.65 dL/g or more, the laminated metal sheet has better formability. When the intrinsic viscosity is 1.00 dL/g or less, the energy consumption in the polymerization process and the extrusion process can be more effectively reduced.

The second polyester can be polybutylene terephthalate or a copolymer of polybutylene terephthalate and a copolymer component. The second polyester is most preferably homopolybutylene terephthalate. When the second polyester is a polybutylene terephthalate copolymer, the content of the copolymer component in the copolymer is preferably 15 mol% or less, more preferably 10 mol% or less.

When the proportion of the copolymer component in the copolymer is 15 mol% or less, a better crystallization rate can be obtained, and the appearance deterioration of the polyester film 30 during the retort sterilization process can be more effectively prevented or reduced.

The acid components and the alcohol components described for the first polyester can be used as the copolymer component of the second polyester. Ethylene glycol, which is a main component of the first polyester, can also be used as the copolymer component. The copolymer component of the second polyester may be one or two or more of these components.

The intrinsic viscosity of the second polyester is preferably 0.75 to 1.30 dL/g. When the intrinsic viscosity is 0.75 dL/g or more, the laminated metal sheet has better formability. When the intrinsic viscosity is 1.30 dL/g or less, the energy consumption in the polymerization process and the extrusion process can be more effectively reduced.

In the polyester film 30, the content ratio of the first polyester to the second polyester is from 20:80 to 50:50 on a mass% basis. The content of the first polyester is preferably 30% or more. The content of the first polyester is preferably 45% or less. The content ratio of the first polyester to the second polyester is more preferably from 30:70 to 45:55.

When the content of the first polyester in the polyester film 30 exceeds 50 mass%, the crystallization rate tends to decrease, and the film appearance tends to deteriorate during the retort sterilization process. When the content of the first polyester is less than 20 mass%, the adhesion between the metal sheet 20 and the polyester film 30 tends to deteriorate. As a result, the polyester film 30 may peel off from the metal sheet 20 during formation of the laminated metal container 100 or during the retort sterilization process.

The polyester film 30 preferably has at least one melting peak temperature of 200°C to 230°C. The melting peak temperature is the peak temperature of the endothermic peak when the film is heated from -50°C to 290°C at 10°C/min in differential scanning calorimetry (DSC).

When at least one melting peak temperature is 200°C or higher, the polyester film exhibits better heat resistance. When at least one melting peak temperature is 230°C or lower, the energy consumption during the manufacture of the polyester film and the appearance deterioration of the polyester film during the retort sterilization process can be more effectively reduced.

The polyester film 30 can contain additives, such as an antioxidant, an inorganic lubricant, an organic lubricant, a crystal nucleating agent, a heat stabilizer, an antistatic agent, and a color pigment, in addition to the first polyester and the second polyester. To improve heat resistance, the polyester film 30 preferably contains an antioxidant in the range of 0.0001 mass% or more and 1.0000 mass% or less.

Examples of the antioxidant include, but are not limited to, known antioxidants classified as hindered phenols, hydrazines, phosphites, and other types of antioxidants.

To improve the handling of the polyester film 30, the polyester film 30 preferably contains 0.01 to 0.50 mass% of an inorganic lubricant relative to the entire polyester film.

The polyester film 30 can be composed of multiple layers. Examples of lamination methods for forming the polyester film 30 include a co-extrusion method using a feed block or a multi-manifold, a method of laminating multiple films together, and a lamination method in which molten resin is directly laminated onto a film, and other known methods. The lamination method for forming the polyester film 30 is preferably a co-extrusion method from the viewpoint of productivity and energy saving.

When the polyester film 30 is formed as a layer structure composed of multiple layers, the outermost layer preferably contains 0.01 to 0.50 mass% of an inorganic lubricant. For example, when the polyester film 30 is composed of three layers, the additives, such as an inorganic lubricant, are preferably added to the outermost layer. The addition of the additives only to the outermost layer can reduce the amount of the additives added.

Examples of the inorganic lubricant include, but are not limited to, known inorganic lubricants, such as silicon oxide, diatomaceous earth, and talc.

To improve the formability of the laminated metal container 100, the polyester film 30 preferably contains 0.01 to 1.00 mass% of an organic lubricant relative to the entire polyester film 30. When the polyester film 30 is formed as a layer structure composed of multiple layers, the outermost layer preferably contains 0.01 to 1.00 mass% of an organic lubricant.

Examples of the organic lubricant include, but are not limited to, carnauba waxes, polyolefin waxes, modified polyolefin waxes, and other known organic lubricants.

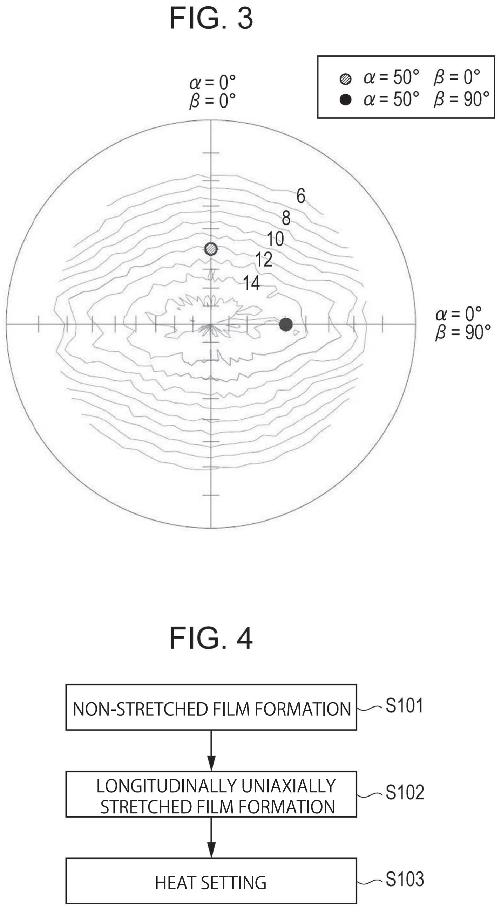

Fig. 2 is the pole figure of the intensity of the (100) diffraction of the polyester film 30. Fig. 3 is the pole figure of the intensity of the (010) diffraction of the polyester film 30. The net intensities in the pole figures of the polyester film 30 shown in Figs. 2 and 3 satisfy formulas (1) and (2) below.

[Math. 3]

$$0.20 \leq I_{100}^{(60,0)}/I_{100}^{(60,90)} \leq 0.60 \quad \cdots \quad (1)$$

$$0.30 \leq I_{010}^{(50,0)}/I_{010}^{(50,90)} \leq 0.85 \quad \cdots \quad (2)$$

In X-ray diffraction measurement using Cu Kα radiation, the diffraction peak appearing at $2\theta = 24.0 \pm 1.0°$ is attributed to (100) diffraction, and the diffraction peak appearing at $2\theta = 17.5 \pm 0.5°$ is attributed to (010) diffraction. The pole figures are measured with $\alpha = 0°$ defined as the grazing angle at which the bisector of the angle between the incident X-ray and the reflected X-ray is parallel to the film plane, and $\beta = 90°$ is defined as the in-plane rotation angle at which the maximum diffraction intensity is observed at $\alpha = 60°$ in the pole figure of the (100) diffraction.

$I_{100}^{(60,0)}$ is the net intensity at $\alpha = 60°$ and $\beta = 0°$ in the pole figure of intensity of the (100) diffraction. $I_{100}^{(60,0)}$ is indicated by a hatched circle in Fig. 2.

$I_{100}^{(60,90)}$ is the net intensity at $\alpha = 60°$ and $\beta = 90°$ in the pole figure of intensity of the (100) diffraction. $I_{100}^{(60,90)}$ is indicated by the filled circle in Fig. 2.

$I_{010}^{(50,0)}$ is the net intensity at $\alpha = 50°$ and $\beta = 0°$ in the pole figure of intensity of the (010) diffraction. $I_{010}^{(50,0)}$ is indicated by the hatched circle in Fig. 3.

$I_{010}^{(50,90)}$ is the net intensity at $\alpha = 50°$ and $\beta = 90°$ in the pole figure of intensity of the (010) diffraction. $I_{010}^{(50,90)}$ is indicated by the filled circle in Fig. 3.

The net intensity in the pole figures is the diffraction intensity obtained by subtracting the diffraction intensity at the point with the lowest diffraction intensity at $\alpha = 15°$ from the diffraction intensity at each point in the pole figures (Figs. 2 and 3).

$I_{100}^{(60,0)}$ and $I_{100}^{(60,90)}$ respectively represent the proportions of the (100) planes of the first polyester, that is, the aromatic ring planes, oriented at $\beta = 0°$ and $\beta = 90°$.

$I_{100}^{(60,0)}/I_{100}^{(60,90)}$ is 0.20 or more and 0.60 or less, preferably 0.40 or more and 0.50 or less. When $I_{100}^{(60,0)}/I_{100}^{(60,90)}$ is 0.20 or more and 0.60 or less, the polyester film 30 can have improved thickness uniformity. In addition, the polyester film 30 is less subject to thermal shrinkage in the width direction when the polyester film 30 is laminated with the metal sheet 20, and the polyester film 30 can have higher tension stability in the longitudinal direction of the film 30.

When $I_{100}^{(60,0)}/I_{100}^{(60,90)}$ is less than 0.20, the polyester film 30 tends to shrink in the width direction of the metal sheet 20 when the polyester film 30 is laminated with the metal sheet 20. As a result, the tension of the polyester film 30 in the longitudinal direction of the metal sheet 20 tends to become unstable.

When $I_{100}^{(60,0)}/I_{100}^{(60,90)}$ is more than 0.60, the uniformity of the thickness of the polyester film 30 tends to be impaired due to the small stretch ratio of the polyester film 30.

$I_{010}^{(50,0)}$ and $I_{010}^{(50,90)}$ respectively represent the proportions of the (010) orientations of the first polyester at $\beta = 0°$ and $\beta = 90°$. $I_{010}^{(50,0)}/I_{010}^{(50,90)}$ is 0.30 or more and 0.85 or less, preferably 0.50 or more and 0.80 or less. When $I_{010}^{(50,0)}/I_{010}^{(50,90)}$ is 0.30 or more and 0.85 or less, the polyester film 30 can have improved thickness uniformity. The polyester film 30 is less subject to thermal shrinkage in the width direction of the metal sheet 20 when the polyester film 30 is laminated with the metal sheet 20. This can prevent or reduce instability in the tension of the polyester film 30 in the longitudinal direction of the metal sheet 20.

When $I_{010}^{(50,0)}/I_{010}^{(50,90)}$ is less than 0.30, the polyester film 30 tends to easily shrink in the width direction of the metal sheet 20 when the polyester film 30 is laminated with the metal sheet 20. The polyester film 30 tends to have unstable tension in the longitudinal direction of the metal sheet 20 when the polyester film 30 is laminated with the metal sheet 20.

When $I_{010}^{(50,0)}/I_{010}^{(50,90)}$ is more than 0.85, the uniformity of the thickness of the polyester film 30 tends to be impaired due to the small stretch ratio.

For the polyester film of the present invention, the sample standard deviation of the thickness measured in the direction of the incident X-ray at $\beta = 0°$ in the pole figures is preferably 10% or less of the average film thickness, more preferably 1% or less.

The thickness of the polyester film 30 is determined by calculating the average and sample standard deviation of the thickness measured at 1,000 points at 1 mm intervals over a distance of 1,000 m in the direction of $\beta = 0°$ using a constant-pressure thickness gauge.

The direction of $\beta = 0°$ corresponds to the stretching direction of the polyester film 30. When the sample standard deviation of the thickness of the polyester film 30 is 10% or less of the average thickness of the polyester film 30, the polyester film 30 has been stretched to an elongation beyond the necking range in stretching.

When the polyester film 30 has such a thickness, the polyester film 30 exhibits stiffness and improved handling. Furthermore, the polyester film 30 also has improved tension stability in the longitudinal direction of the metal sheet 20 when the polyester film 30 is laminated with the metal sheet 20. In addition, the polyester film 30 or the metal sheet 20 is unlikely to break when the laminated metal sheet 10 is formed into the laminated metal container 100.

The average thickness of the polyester film 30 is 8 to 50 $\mu$m, preferably 10 to 30 $\mu$m, more preferably 11 to 20 $\mu$m.

When the average thickness of the polyester film 30 is 8 $\mu$m or more, better corrosion resistance can be ensured even after the laminated metal sheet 10 is formed into the laminated metal container 100.

When the average thickness of the polyester film 30 is 50 $\mu$m or less, better energy-saving effects can be obtained in film manufacturing.

(Method for Manufacturing Polyester Film) Next, the method for manufacturing the polyester film 30 will be described below. Fig. 4 illustrates the process flow for manufacturing the polyester film 30. Referring to Fig. 4, the method for manufacturing the polyester film 30 involves a non-stretched film forming step (Step S101) of forming a non-stretched film from a resin composition using an extruder. Next, a longitudinally uniaxially stretched film forming step (Step S102) of forming a longitudinally uniaxially stretched film by longitudinally stretching the non-stretched film is carried out. Furthermore, a heat-setting step (Step S103) of performing heat-setting by heating the longitudinally uniaxially stretched film is carried out to manufacture the polyester film 30.

In the non-stretched film forming step in Step S101, the first polyester and the second polyester are essential raw materials. Additives, such as an antioxidant, an inorganic lubricant, an organic lubricant, a crystal nucleating agent, a heat stabilizer, an antistatic agent, and a color pigment, may be added to the raw materials.

The raw materials contain the first polyester and the second polyester in a ratio of 20:80 to 50:50 on a mass% basis. The content of the first polyester in the raw materials is preferably 30% or more. The content of the first polyester is preferably 45% or less. The content ratio of the first polyester to the second polyester is more preferably 30:70 to 45:55.

These raw materials and a master batch containing additives, such as an inorganic lubricant, dispersed in resin are mixed in the form of pellets or other forms by, for example, dry blending to form a resin mixture. The resin mixture is dried in hot air or under vacuum as necessary, and then fed to an extruder.

The first polyester and the second polyester are heated in the extruder to a temperature equal to or higher than their melting point to melt. The molten resin composition, after being filtered to remove foreign matter, modified resin, and other impurities, is fed to the T-die through a gear pump and then extruded and discharged from the T-die. The resin composition is formed into a sheet when extruded and discharged through the T-die.

When the polyester film 30 is composed of multiple layers, for example, multiple layers can be laminated and integrated into the polyester film 30 by co-extrusion. In this case, a feed block or a multi-manifold die can be used to melt-extrude resin compositions and other materials for forming each layer using several extruders.

The molten resin composition discharged from the T-die is cooled and solidified by a cooling device, such as a cast roll, to form a non-stretched polyester film (hereinafter also referred to as "non-stretched film"). When the molten resin composition is solidified by cooling, an electrostatic pinning device, a vacuum chamber, or other devices are preferably used. The use of these devices can improve the adhesion between the resin composition and the cast roll or other units to provide a uniform non-stretched film.

The longitudinally uniaxially stretched film forming step in Step S102 involves longitudinally stretching the film by using a longitudinal uniaxial stretching machine equipped with preheating rolls and a stretching roll. Specifically, the non-stretched film is heated to a predetermined temperature as the non-stretched film passes through the preheating rolls. The difference in peripheral speed between the preheating rolls and the preceding roll is preferably less than 2%.

The non-stretched film that has been heated to a predetermined temperature by the preheating rolls is stretched in the longitudinal direction between the stretching roll and the final preheating roll immediately before the stretching roll. The difference in peripheral speed between the stretching roll and the preceding roll is preferably 50% or more.

In addition to the preheating rolls, an infrared heater may be used to heat the non-stretched film. For example, the infrared heater may be disposed between the final preheating roll, which is the preheating roll closest to the stretching roll, and the stretching roll. When the non-stretched film is heated by using the infrared heater, the final preheating roll can have a low temperature.

When the final preheating roll has a low temperature, the non-stretched film is less likely to stick to the preheating rolls. Longitudinal uniaxial stretching may be performed in multiple stages using multiple stretching rolls.

The stretching temperature in the longitudinally uniaxially stretched film forming step is the maximum temperature of the film in the section between the final preheating roll and the stretching roll. The longitudinally uniaxially stretched film forming step is carried out at a stretching temperature of 50°C or higher and 80°C or lower. The stretching temperature is preferably 60°C or higher. The stretching temperature is preferably 75°C or lower. The stretching temperature is more preferably 60°C or higher and 75°C or lower.

When the stretching temperature is 50°C or higher, the film exhibits greater elongation at break and is unlikely to experience reduced transparency caused by excessive crystallization. When the stretching temperature is 80°C or lower, the stress-strain curve has a narrower yield plateau, and the longitudinally uniaxially stretched film tends to have improved thickness uniformity.

The stretch ratio in longitudinal stretching is 3.0 or more and 7.0 or less. The stretch ratio in longitudinal stretching is preferably 4.0 or more. The stretch ratio in longitudinal stretching is preferably 5.0 or less. The stretch ratio in longitudinal stretching is more preferably 4.0 or more and 5.0 or less. The stretch ratio in longitudinal stretching can be expressed as the ratio of the line speed on the exit side of the longitudinal stretching machine to the line speed on the entry side of the stretching machine.

When the stretch ratio is less than 3.0, $I_{010}^{(50,0)}/I_{010}^{(50,90)}$ may be more than 0.85. When the stretch ratio is more than 7.0, $I_{010}^{(50,0)}/I_{010}^{(50,90)}$ may be less than 0.3. When the stretch ratio is more than 7.0, the film tends to break easily during stretching.

The longitudinally uniaxially stretched film forming step is carried out with the temperature of the final preheating roll set at 40°C or higher and 80°C or lower. The temperature of the final preheating roll is preferably 60°C or higher. The temperature of the final preheating roll is preferably 75°C or lower. The temperature of the final preheating roll is more preferably 60°C or higher and 75°C or lower.

When the temperature of the final preheating roll is lower than 40°C, the polyester film may be stretched below the glass transition temperature of the polyester film, and the resin composition film tends to break easily during stretching.

When the temperature of the final preheating roll is higher than 80°C, the longitudinally uniaxially stretched film tends to stick to the roll, which reduces productivity and degrades the thickness accuracy of the longitudinally uniaxially stretched film.

The heat-setting step in Step S103 is an optional step. Heat setting is preferably performed by heating the polyester film 30 at a temperature that is at least 5°C higher than the temperature of the final preheating roll during stretching and at least 50°C lower than the melting point of the polyester film 30. Heat setting is preferably performed by heating the polyester film 30 at a temperature that is at least 5°C higher than the stretching temperature and at least 50°C lower than the melting point of the polyester film 30.

The longitudinally uniaxially stretched film can also be heated using a heated roll in the same manner as in preheating in longitudinal stretching. In this case, the roll is preferably preheated to a temperature that is at least 5°C higher than the temperature of the final preheating roll during stretching, but lower than 110°C. This can prevent or reduce the tendency of the longitudinally uniaxially stretched film to stick to the roll.

During heat setting, the longitudinally uniaxially stretched film may be relaxed in the longitudinal direction. The relaxation rate of the longitudinally uniaxially stretched film is preferably 0.5% or more and 5% or less. The longitudinally uniaxially stretched film may be relaxed by using a pair of rolls with different peripheral speeds, but preferably relaxed in multiple stages by using multiple pairs of rolls.

In the heat-setting step in Step S103, stiffness can be imparted to the longitudinally uniaxially stretched film through thermal crystallization and the relaxation of the residual stress caused by stretching.

(Method for Manufacturing Laminated Metal Sheet)

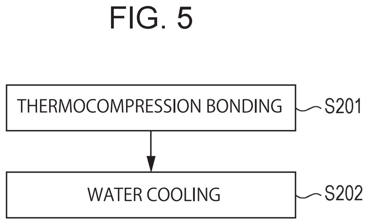

The method for manufacturing the laminated metal sheet 10 will be described. Fig. 5 illustrates the process flow for manufacturing the laminated metal sheet 10. Referring to Fig. 5, the metal sheet 20 and the polyester film 30 are laminated together by thermocompression bonding using a laminating roll to produce a thermocompression bonded body (Step S201).

The thermocompression bonding step in Step S201 involves laminating the polyester film 30 onto at least one of the top surface 21 and the bottom surface 22 of the metal sheet 20.

The thermocompression bonding step in Step S201 is carried out by placing the polyester film 30 between the laminating roll and the metal sheet 20 preheated to a predetermined temperature, and pressing the polyester film 30 against the metal sheet 20 using the laminating roll. In this step, the polyester film 30 is melted by the heat of the metal sheet 20 and press-laminated to the metal sheet 20.

The metal sheet 20 is preheated at a temperature from -20°C to +50°C relative to the melting point of the polyester film 30. The metal sheet 20 is preferably preheated at a temperature equal to or higher than the melting point of the polyester film 30. The metal sheet 20 is preferably preheated at a temperature not higher than 30°C above the melting point of the polyester film 30. The metal sheet 20 is more preferably preheated at a temperature from the melting point of the polyester film 30 to 30°C above the melting point.

When the metal sheet 20 is preheated at a temperature lower than 20°C below the melting point of the polyester film 30, the polyester film 30 may not melt or adhere to the metal sheet 20. When the metal sheet 20 is preheated at a temperature higher than 50°C above the melting point of the polyester film 30, the polyester film 30 in contact with the laminating roll may melt and undergo a deterioration in appearance. In addition, the polyester film 30 may adhere to the laminating roll, which may reduce productivity.

The polyester film 30 used in the thermocompression bonding step in Step S201 may have been heated in advance. In that case, the heating temperature of the polyester film 30 is preferably 150°C or lower. When the polyester film 30 is heated in such a temperature range, the polyester film 30 can be transported smoothly, and the preheating temperature of the metal sheet 20 can be lowered.

The pressure applied by the laminating roll is preferably 0.35 to 1.50 MPa. When the pressure applied by the laminating roll is 0.35 MPa or more, better adhesion is obtained between the metal sheet 20 and the polyester film 30, and the laminated metal sheet 10 has better appearance.

When the pressure applied by the laminating roll is 1.50 MPa or less, heat transfer from the metal sheet 20 to the laminating roll is further reduced, resulting in lower energy consumption in the manufacturing process. In addition, the wear of the laminating roll is also further reduced under these conditions.

The laminating roll is preferably heated at a temperature from -30°C to +40°C relative to the glass transition temperature of the polyester film 30. Heating the laminating roll can reduce the spontaneous temperature rise caused by heat input from the metal sheet and facilitates control of the surface crystallinity of the polyester film 30.

The thermocompression bonded body, which is the laminated metal sheet after thermocompression bonding, is cooled with water within 7 seconds after thermocompression bonding in Step 201 (Step S202). In the water-cooling step in Step S202, the thermocompression bonded body is sprayed with water or immersed in water.

The cooling water used in the water-cooling step in Step S202 may be heated for operational stability. The temperature of the cooling water is preferably not higher than 40°C above the glass transition temperature of the polyester film 30.

After water-cooling, the cooling water is removed from the thermocompression bonded body using squeezing rolls. The thermocompression bonded body is subjected to post-heat treatment and lubrication treatment as necessary. After inspection for surface defects, internal defects, sheet thickness, and other factors, the thermocompression bonded body is, for example, coiled by using a tension reel. The thermocompression bonded body may be slit or sheared to form a sheet product.

As also described in Fig. 1, the surface of the metal sheet 20 laminated with the polyester film 30 is preferably positioned on the top surface 21 of the laminated metal container 100. The metal sheet 20 has been cast and rolled to a predetermined thickness and width and, as necessary, then subjected to annealing, temper rolling, and surface treatments, such as plating.

The wide-angle X-ray diffraction spectrum of the laminated metal sheet 10 thus produced preferably satisfies formula (3) below.

[Math. 4]

$$I_{100}{}^{(90,0)}/I_{amorphous}{}^{(90,0)} \leq 1.5 \quad \cdots \quad (3)$$

The wide-angle X-ray diffraction spectrum is measured by the $\theta$-$2\theta$ method using Cu K$\alpha$ radiation at a sample angle of $\alpha$ = 90° and $\beta$ = 0° in the pole figure described above, $I_{100}{}^{(90,0)}$ is the net intensity of the (100) diffraction peak appearing at $2\theta$ = 24.0 $\pm$ 1.0°, and $I_{amorphous}{}^{(90,0)}$ is the net intensity of the amorphous halo appearing at $2\theta$ = 20 $\pm$ 5°.

When no clear peak appears at $2\theta$ = 24.0 $\pm$ 1.0°, the maximum net intensity in the range of $2\theta$ = 23.0° to 25.0° is defined as $I_{100}{}^{(90,0)}$. The net intensity in the wide-angle X-ray diffraction spectrum is the diffraction intensity obtained by subtracting the background intensity, which is represented by the straight line connecting the diffraction intensity at $2\theta$ = 10° and the diffraction intensity at $2\theta$ = 30°, from the diffraction intensity at each $2\theta$.

When the wide-angle X-ray diffraction spectrum of the laminated metal sheet 10 satisfies formula (3), the oriented crystals formed by stretching are converted into an amorphous state by heat during lamination, which improves the formability of the polyester film 30. As a result, the polyester film is less likely to break during formation of the laminated metal container 100, and the corrosion resistance of the polyester film is less likely to degrade. By manufacturing the laminated metal sheet 10 in this way, the laminated metal container 100 can be manufactured more stably with low energy consumption.

When the thermocompression bonded body is naturally cooled without the water-cooling step in Step S202, or when the time from thermocompression bonding to water cooling in Step S202 exceeds 7 seconds, the thermal crystallization of the polyester film 30 will proceed. This makes it difficult to control the wide angle X-ray diffraction spectrum of the laminated metal sheet 10 in a specified range of the present invention.

As described above, the thermocompression bonding step in Step S201 using the thermocompression bonding lamination method described above can improve the adhesion between the polyester film 30 and the metal sheet 20 in a high temperature environment. This also allows the laminated metal sheet 10 to be manufactured with low energy consumption. Specifically, the laminated metal sheet 10 can satisfy the following performances: the adhesion between the polyester film 30 and the metal sheet 30 before and after a high-temperature sterilization process; the discoloration control of the polyester film 30 during the high-temperature sterilization process; and container formability.

The laminated metal sheet 10 in which the polyester film 30 is laminated so that its wide-angle X-ray diffraction spectrum has the diffraction intensity distribution described above allows for improved formability of the resin layer. Thus, the laminated metal sheet 10 can be stably formed into the laminated metal container 100 with low energy consumption. Therefore, the laminated metal sheet 10 can be suitably used as the laminated metal sheet 10 for the laminated metal container 100.

The laminating equipment used for the thermocompression bonding step in Step S201 is provided downstream of a continuous annealing line, a plating line, and other lines. Providing the laminating equipment at such a position can improve productivity.

The bottom surface 22 of the metal sheet 20 may be provided with a thermoplastic resin film different from the polyester film 30, or may be subjected to coating or other treatments. In the case where the bottom surface 22 of the metal sheet 20 is provided with a thermoplastic resin film different from the polyester film 30, the thermoplastic resin film can be provided at any timing. For example, the thermoplastic resin film can be provided by lamination at the same timing as the polyester film 30.

Furthermore, the polyester film 30 may be provided on the metal sheet 20 with an adhesive (not shown) therebetween. Providing the polyester film 30 on the metal sheet 20 with an adhesive therebetween in this manner can lower the temperature of the thermocompression bonding and can improve the adhesion between the polyester film 30 and the metal sheet 20.

Examples of the adhesive include polyester resins, alkyd resins, epoxy resins, acrylic resins, phenolic resins, polyurethane resins, polyamine resins, polyamidoamine resins, and polyamide resins. These adhesives can be used singly or in combination of two or more. Additives may be added to the adhesive as necessary.

(Method for Manufacturing Laminated Metal Container)

The laminated metal container 100 is formed by using the laminated metal sheet 10 as at least one of the plurality of members constituting the laminated metal container 100. As described above, the laminated metal container 100 includes, for example, a three-piece can composed of three members and a two-piece can composed of two members.

For example, the body of a two-piece can is formed by various forming methods, such as Draw and Redraw (DRD) forming, Draw and Ironing (DI) forming, and Draw and Thin Redraw (DTR) forming.

The DI forming and the DTR forming are forming methods involving ironing and require particularly high formability. Since the laminated metal sheet 10 has high formability, the laminated metal sheet 10 can be suitably used in any of the above forming methods.

The laminated metal container 100 may be coated or printed. Various types of the laminated metal containers 100 are formed by various known methods. The laminated metal container 100 can be formed by using, for example, a can-making machine.

The laminated metal container 100 can be particularly suitably used as a container to be subjected to the retort sterilization process.

EXAMPLES

The present invention will be described in more detail below as Examples, but the present invention is not limited to these Examples. Polyester films of Examples 1 to 7 and Comparative Examples 1 to 6 were produced.

(EXAMPLE 1)

Pellets of a PET copolymer, pellets of homo-PBT, and an inorganic lubricant masterbatch were prepared as raw material resins for a polyester film.

The PET copolymer contains 5 mol% isophthalic acid and 3 mol% diethylene glycol as copolymer components and has a melting point of 245°C. Homo-PBT has a melting point of 224°C. The inorganic lubricant was silicon dioxide dispersed in PET having a melting point of 254°C.

The pellets were blended so that the mass ratio of the total amount of PET to the amount of PBT was 40:60 and the silicon dioxide concentration was 0.04% of the total amount of PET and PBT. The pellets were then heated to 150°C under vacuum to remove moisture from the pellets and held for 3 hours to dry. The dried pellets were fed into a single screw extruder and melt-kneaded at 275°C.

Next, the kneaded material was filtered through a 25 $\mu$m cut-off point sintered filter to remove foreign matter and then discharged from a T-die, and the resulting material was solidified by cooling on a cast roll with a surface temperature controlled at 20°C to obtain a non-stretched film.

Next, the non-stretched film was preheated using a ceramic roll heated to 70°C and longitudinally stretched in a single stage in the longitudinal direction of the film at a stretch ratio of 3.5 and a stretching temperature of 70°C. The film was then gradually cooled to room temperature without heat setting and relaxation in the stretching direction, and the film with its edges removed was coiled by a coiling machine to obtain a 20 $\mu$m thick polyester film.

(EXAMPLES 2 to 7)

The polyester films of Examples 2 to 7 were prepared by varying the types of resins used as raw materials for the polyester films, the mass ratio of PET to PBT, the stretch ratio in longitudinal stretching, the preheating roll temperature, and the stretching temperature in longitudinal stretching. Table 1 shows the types of resins used as raw materials, the mass ratio of PET to PBT, the stretch ratio in longitudinal stretching, the preheating roll temperature, and the stretching temperature in longitudinal stretching in Examples 2 to 7. Other conditions are the same as those in Example 1 and are omitted. The proportion of the copolymer component shown in Table 1 is expressed in units of mol%.

(COMPARATIVE EXAMPLES 1 to 6)

The polyester films of Comparative Examples 1 to 6 were prepared by varying the types of resins used as raw materials for the polyester films, the mass ratio of PET to PBT, the stretch ratio in longitudinal stretching, the preheating roll temperature, and the stretching temperature in longitudinal stretching. Table 1 shows the types of resins used as raw materials, the mass ratio of PET to PBT, the stretch ratio in longitudinal stretching, the preheating roll temperature, and the stretching temperature in longitudinal stretching in Comparative Examples 1 to 6. Other conditions are the same as those in Example 1 and are omitted. The proportion of the copolymer component shown in Table 1 is expressed in units of mol%.

(Evaluation)

For the polyester films of Examples 1 to 7 and Comparative Examples 1 to 6, the pole figure was prepared, the thickness of the polyester film was measured, and the melting peak temperature was measured.

(Pole Figure)

Measurements were conducted under the following conditions by Schulze's reflection method using a wide-angle goniometer RINT-2000 available from Rigaku Corporation and a multi-purpose sample stage for pole figure measurements.

X-ray source: Cu K$\alpha$ radiation, tube voltage: 40 kV, tube current: 50 mA, divergence slit: 0.5°, scattering slit: 4 mm, receiving slit: 3 mm, divergence vertical limit slit: 1.2 mm, filter: Cu K$\beta$ filter, $\alpha$: 15° to 90° (5°/Step), $\beta$: 0° to 360° (5°/Step continuous scan), $\beta$ scan speed: 360°/min

With regard to the sample orientation, $\alpha$ = 0° was defined as the grazing angle at which the bisector of the angle between the incident X-ray and the reflected X-ray was parallel to the film plane, and $\beta$ = 90° was defined as the in-plane rotation angle at which the maximum diffraction intensity was observed at $\alpha$ = 60° in the pole figure of the (100) diffraction.

In the wide-angle X-ray diffraction spectrum measured by the $\theta$-2$\theta$ method while rotating the $\beta$-axis at a sample orientation of $\alpha$ = 90°, the diffraction peak appearing at 2$\theta$ = 24.0° was attributed to (100) diffraction.

As for (010) diffraction, no diffraction peak was observed at 2$\theta$ = 17.5 $\pm$ 0.5° in the $\theta$-2$\theta$ method. Therefore, the laminated metal sheet of Example 1 was heat-treated at 120°C for 15 minutes, and the wide-angle X-ray diffraction spectrum was measured again, and the diffraction peak appearing at 2$\theta$ = 17.0° was attributed to (010) diffraction. The other polyester films were measured based on the diffraction angle 2$\theta$ = 17.0° obtained for Example 1.

Therefore, the pole figures were measured at 2$\theta$ = 24.0° for (100) diffraction and 2$\theta$ = 17.0° for (010) diffraction. The net intensity in the pole figures was the diffraction intensity obtained by subtracting the diffraction intensity at the point with the lowest diffraction intensity at $\alpha$ = 15° from the diffraction intensity at each point in each pole figure.

From the obtained pole figures, the net intensity at $\alpha$ = 60° and $\beta$ = 0° in the pole figure of the (100) diffraction was defined as $I_{100}^{(60,0)}$. The net intensity at $\alpha$ = 60° and $\beta$ = 90° in the pole figure of the (100) diffraction was defined as $I_{100}^{(60,90)}$. The net intensity at $\alpha$ = 50° and $\beta$ = 0° in the pole figure of the (010) diffraction was defined as $I_{010}^{(50,0)}$. The net intensity at $\alpha$ = 50° and $\beta$ = 90° in the pole figure of the (010) diffraction was defined as $I_{010}^{(50,90)}$. Formula (1) and formula (2) below were examined.

[Math. 5]

$$I_{100}^{(90,0)}/I_{amorphous}^{(90,0)} \leq 1.5 \quad \cdots \quad (3)$$

(Measurement of Thickness of Polyester Film)

The thickness of the polyester film was measured using a continuous thickness tester FT-A100 available from Fujiwork Co., Ltd., equipped with an electric micrometer probe Millimar 1301, available from Mahr Japan Co., Ltd.

A 1,000 mm length of the polyester film was sampled in the direction of $\beta = 0°$ and measured at 1 mm/Step for 1,000 Steps. The values represented by the following formulas for the thickness $t_i$ (i = 1 to 1000) obtained at each point were defined as the average $\mu$ and sample standard deviation $\sigma$ of the thickness.

[Math. 6]

$$\mu = \Sigma^{1000}{}_{i=1}(t_i)/1000$$

$$\sigma = \Sigma^{1000}{}_{i=1}(t_i - \mu)^2/999$$

(Measurement of Melting Peak Temperature of Polyester Film)

The thermal properties of the polyester film were measured using a differential scanning thermal analyzer DSCQ100 available from TA Instruments Japan, Inc. Five milligrams of the polyester film was taken as a sample, cut, and placed in an aluminum dish. The sample was cooled to - 50°C in a nitrogen atmosphere, and the 1st Run was performed while the temperature was increased to 290°C at 10°C/min. The temperature was held at 290°C for 5 minutes and rapidly decreased using liquid nitrogen. Then, the 2nd Run was performed while the temperature was increased again from - 50°C to 290°C at 10°C/min. The endothermic peak in the 1st Run, excluding the enthalpy relaxation peak appearing near the glass transition temperature, was identified as the melting peak.

The obtained evaluation results of the polyester films of Examples 1 to 7 and Comparative Examples 1 to 6 are shown in Table 1. The pole figure of the intensity of the (100) diffraction and the pole figure of the intensity of the (010) diffraction of the polyester film of Example 1 are shown in Figs. 2 and 3, respectively.

[Table 1]

| | Polyester | | | | | | Pole Figure | | Film Thickness | | Melting Peak Temperature (°C) |
| | Proportion of Copolymer Component | | Mass Ratio PET:PBT | Stretch ratio | Temperature of Final Preheating Roll (°C) | Stretching Temperature (°C) | $I_{100}{}^{(60,0)}/I_{100}{}^{(60,90)}$ | $I_{010}{}^{(50,0)}/I_{010}{}^{(50,90)}$ | Average (μm) | Sample Standard Deviation (μm) | |
| | PET | PBT | | | | | | | | | |
|---|---|---|---|---|---|---|---|---|---|---|---|
| Example 1 | 8% | 0% | 40:60 | 3.5 | 70 | 70 | 0.57 | 0.84 | 19.7 | 1.8 | 220, 242 |
| Example 2 | 8% | 0% | 40:60 | 3.5 | 70 | 70 | 0.57 | 0.84 | 19.7 | 1.8 | 220, 242 |
| Example 3 | 8% | 0% | 20:80 | 5.0 | 70 | 70 | 0.32 | 0.38 | 20.1 | 0.4 | 221, 243 |
| Example 4 | 8% | 0% | 20:80 | 5.0 | 70 | 70 | 0.32 | 0.38 | 20.1 | 0.4 | 221, 243 |
| Example 5 | 0% | 0% | 50:50 | 4.0 | 70 | 70 | 0.52 | 0.77 | 21.3 | 0.7 | 221, 245 |
| Example 6 | 0% | 0% | 50:50 | 4.0 | 70 | 70 | 0.52 | 0.77 | 21.3 | 0.7 | 221, 245 |
| Example 7 | 8% | 0% | 40:60 | 3.5 | 60 | 60 | 0.58 | 0.84 | 19.9 | 1.7 | 220, 242 |
| Comparative Example 1 | 8% | 0% | 60:40 | 5.0 | 70 | 70 | 0.30 | 0.36 | 19.9 | 0.5 | 221, 243 |
| Comparative Example 2 | 8% | 0% | 40:60 | 2.5 | 70 | 70 | 0.80 | 0.91 | 21.5 | 3.1 | 220, 241 |
| Comparative Example 3 | 8% | 0% | 40:60 | 2.5 | 70 | 70 | 0.80 | 0.91 | 21.5 | 3.1 | 220, 241 |
| Comparative Example 4 | 8% | 0% | 40:60 | 7.5 | 70 | 70 | 0.22 | 0.25 | 20.2 | 0.5 | 222, 243 |
| Comparative Example 5 | 8% | 0% | 40:60 | 3.5 | 35 | 35 | 0.31 | 0.35 | 20.4 | 0.9 | 220, 242 |
| Comparative Example 6 | 8% | 0% | 40:60 | 3.5 | 85 | 85 | 0.57 | 0.83 | 19.5 | 2.8 | 220, 241 |

(Evaluation Results of Polyester Film)

In Comparative Examples 4 and 5, breakage occurred during longitudinal stretching in the polyester film manufacturing process, and samples were not stably collected successfully. In Comparative Example 6, the film stuck to the preheating roll during longitudinal stretching in the polyester film manufacturing process, and a sample was not stably collected successfully.

In Examples 1 to 7 and Comparative Examples 1 to 3, the above troubles did not occur, and the films were stably produced successfully.

(Preparation of Laminated Metal Sheet)

Laminated metal sheets were prepared by using the polyester films of Examples 1 to 7 and Comparative Examples 1 to 6.

TFS was used as a metal sheet. The steel substrate for TFS was low-carbon steel with a thickness of 0.22 mm and a temper grade of T3CA, which had been subjected to cold rolling, annealing, and temper rolling. The steel substrate that had been subjected to chrome plating after degreasing and pickling was used for TFS. In the TFS, the coating weight of the metal chromium layer was 120 mg/m$^2$ in terms of Cr, and the coating weight of the hydrated chromium oxide layer was 10 mg/m$^2$ in terms of Cr.

(Lamination on Metal Sheet by Thermocompression bonding Method)

The polyester film of each of Examples 1 to 7 and Comparative Examples 1 to 6 was provided on the top surface of the metal sheet by the thermocompression bonding method. The bottom surface was provided with a biaxially stretched PET film with a melting point of 240°C and a thickness of 28 μm. The pressure applied by the laminating roll was 0.60 MPa. The temperature of the laminating roll was 80°C.

A pair of laminating rolls was placed so as to sandwich the top surface and bottom surface of the metal sheet. The polyester film of each of Examples 1 to 7 and Comparative Examples 1 to 6 was placed between the metal sheet and each laminating roll, and the metal sheet was passed through the laminating rolls. One second after the metal sheet was pressed by the laminating rolls, the metal sheet was cooled with water to obtain a laminated metal sheet in which the polyester film was laminated to each side of the metal sheet.

In the above thermocompression bonding, the lamination entry-side sheet temperature was 240°C. The polyester films of Examples 2 to 7 and Comparative Examples 1 to 6 were produced in the same manner as in Example 1, except that the lamination entry-side sheet temperature was varied as shown in Table 2.

Wide-angle X-ray diffraction spectra were measured for the laminated metal sheets including the obtained polyester films of Examples 1 to 7 and Comparative Examples 1 to 6.

(Wide-Angle X-Ray Diffraction Spectrum of Laminated Metal Sheet)

Measurements were conducted under the following conditions by the θ-2θ method using a wide-angle goniometer SmartLab available from Rigaku Corporation.

X-ray source: Cu Kα radiation, tube voltage: 40 kV, tube current: 40 mA, incident slit: 0.5°, incident parallel slit: 5.0°, receiving slit: 0.6 mm, receiving parallel slit: 5.0°, monochromator slit: BBM, length limiting slit: 10.0 mm, 2θ = 10° to 30° (0.1°/Step), counting time: 8 sec/Step

During the measurement, the sample was oriented in the direction corresponding to α = 90° and β = 0° in the pole figure. For the obtained wide-angle X-ray diffraction spectrum, the net intensity was obtained by subtracting the background intensity, which was represented by the straight line connecting the diffraction intensity at 2θ = 10.0° and the diffraction intensity at 2θ = 30°, from the diffraction intensity at each 2θ. The peak appearing at 2θ = 24.0° in the net intensity spectrum was attributed to (100) diffraction, and the intensity of the peak was defined as $I_{100}^{(90,0)}$.

When no clear peak appeared at 2θ = 24.0° ± 1.0°, the maximum intensity in the range of 2θ = 23.0 to 25.0° was defined as $I_{100}^{(90,0)}$. The intensity of the amorphous halo appearing at 2θ = 20.4° in the net intensity spectrum was defined as amorphous(90,0), and formula (3) below was examined.

[Math. 7]

$$I_{100}^{(90,0)}/I_{amorphous}^{(90,0)} \leq 1.5 \quad \cdots (3)$$

The initial adhesion, the adhesion after the retort sterilization process, and the appearance after the retort sterilization process were evaluated for the laminated metal sheets obtained by using the polyester films of Examples 1 to 7 and Comparative Examples 1 to 6 above. In addition, laminated metal containers were formed using these laminated metal sheets, and the formability of the laminated metal sheets was evaluated.

(Initial Adhesion)

A sample measuring 120 mm in the transport direction and 15 mm in the sheet width direction was cut from each of the laminated metal sheets obtained by using the polyester films of Examples 1 to 7 and Comparative Examples 1 to 6. Part of the polyester film was peeled off from the longer-side end of each cut sample. The peeled polyester film was opened in the direction (at an angle of 180°) opposite to the peeling direction, and a peel test was conducted using a tensile testing machine at a tensile speed of 30 mm/min. The adhesive strength per 15 mm width was evaluated based on the following rating scale.

A: 10.0 N/15 mm or more
B: 5.0 N/15 mm or more and less than 10.0 N/15 mm
C: less than 5.0 N/15 mm

(Adhesion After Retort Sterilization Process)

A sample measuring 100 mm in the transport direction and 30 mm in the sheet width direction was cut out from each of the laminated metal sheets obtained by using the polyester films of Examples 1 to 7 and Comparative Examples 1 to 6. Part of each polyester film was peeled off from the longer-side end of the cut sample. The peeled film was opened in the direction (at an angle of 180°) opposite to the peeling direction, a 100 g weight was fixed to the film, and the film was subjected to a retort sterilization process under pressurized steam at 125°C for 25 minutes. The film peel length after the retort sterilization process was measured and evaluated based on the following rating scale.

A: less than 2 mm
B: 2 mm or more and less than 10 mm
C: 10 mm or more

(Appearance After Retort Sterilization Process)

A $\varphi$48 sample was punched out from each of the laminated metal sheets obtained by using the polyester films of Examples 1 to 7 and Comparative Examples 1 to 6. The sample was attached to the bottom of a commercially available 350-mL negative pressure steel can ($\varphi$66, height 122.2 mm) using a donut-shaped magnet with an outer diameter of $\varphi$50 and an inner diameter of $\varphi$30.
The steel can with the sample attached was subjected to a retort sterilization process under pressurized steam at 130°C for 10 minutes. After the retort sterilization process, the sample was removed from the steel can, and the change in appearance was visually observed and evaluated based on the following rating scale.

A: No change in appearance
B: Slight haziness in appearance (less than 5% in area fraction)
C: Noticeable whitening in appearance (5% or more in area fraction)

(Formability of Laminated Metal Sheet)

After applying paraffin wax to the laminated metal sheets obtained by using the polyester films of Examples 1 to 7 and Comparative Examples 1 to 6, each of the resulting sheets was punched into a $\varphi$123 disk and then drawn to obtain a shallow-drawn metal container with an inner diameter of $\varphi$71 and a height of 36 mm.
The shallow-drawn can was loaded into a DI forming machine and was subjected to forming in the re-drawing process and the three-stage ironing process at a total reduction ratio of 50%, with a punch speed of 200 mm/s and a stroke of 560 mm. Finally, a laminated metal container with a can inner diameter of 52 mm and a can height of 90 mm was produced. During the DI forming, tap water was circulated at a temperature of 50°C. After can manufacturing, the area fraction of tears (scratches) of the polyester film on the target surface was evaluated based on the following rating scale.

A: The area fraction of scratches is less than 5%.
B: The area fraction of scratches is 5% or more and less than 15%.
C: The area fraction of scratches is 15% or more.

Table 2 shows the evaluations on the laminated metal sheets and the laminated metal containers obtained by using the polyester films of Examples 1 to 7 and Comparative Examples 1 to 6 described above.

[Table 2]

| | Lamination Entry-Side Sheet Temperature (°C) | $I_{100}^{(90,0)}/I_{amorphous}^{(90,0)}$ | Initial Adhesion | Evaluation After Retort Sterilization Process | | Formability of Laminated Metal Container |
|---|---|---|---|---|---|---|
| | | | | adhesion | appearance | |
| Example 1 | 240 | 0.75 | A | A | A | A |
| Example 2 | 230 | 0.79 | A | A | B | A |
| Example 3 | 240 | 0.76 | A | A | A | A |
| Example 4 | 230 | 0.81 | A | B | A | A |
| Example 5 | 240 | 0.80 | A | A | A | A |
| Example 6 | 230 | 1.30 | B | B | B | B |
| Example 7 | 240 | 0.73 | A | A | A | A |
| Comparative Example 1 | 240 | 0.80 | A | A | C | A |
| Comparative Example 2 | 240 | 0.75 | A | A | A | C |
| Comparative Example 3 | 220 | 4.38 | C | C | A | C |
| Comparative Example 4 | 240 | 0.78 | A | A | A | C |
| Comparative Example 5 | 240 | 0.78 | A | A | A | C |
| Comparative Example 6 | 240 | 0.74 | A | A | A | C |

(Evaluation Results of Laminated Metal Sheet)

In Comparative Example 1, the appearance deteriorated after the retort sterilization process. In Comparative Example 3, good results were not obtained in the evaluation of the initial adhesion and the adhesion after the retort sterilization process. In Comparative Examples 2 to 6, good results were not obtained in the evaluation of the formability of the laminated metal sheets. Specifically, in Comparative Examples 2 to 6, the area fraction of tears (scratches) of the polyester films on the target surface exceeded a specified value, and stable production was not achieved.

Table 2 shows that, in Examples 1 to 7, good results were obtained in the evaluation of all of the initial adhesion, the adhesion after the retort sterilization process, the appearance after the retort sterilization process, and the formability of the laminated metal sheets. In Examples 1 to 7, stable production was achieved at any stage of the manufacturing process of the laminated metal sheet and the laminated metal container.

In particular, in Examples 1 to 7, the appearance deterioration after the retort sterilization process was rated B or above. Therefore, stable manufacturing with low energy consumption can be achieved at any stage of the manufacturing process of the polyester film, the laminated metal sheet, and the laminated metal container according to the present invention. It was confirmed that the appearance of the polyester films does not deteriorate particularly even after a high-temperature sterilization process, such as a retort sterilization process, which is necessary for food cans and beverage cans.

These results confirm that the polyester films of Examples 1 to 7 meet the performance required for laminated metal containers and have high productivity.

Reference Signs List

| | |
|---|---|
| 100 | laminated metal container |
| 10 | laminated metal sheet |
| 20 | metal sheet |
| 21 | top surface |
| 22 | bottom surface |
| 30 | polyester film |

**Claims**

1. A polyester film comprising: a first polyester containing polyethylene terephthalate as a component; and a second polyester containing polybutylene terephthalate as a component,

wherein the first polyester is polyethylene terephthalate or a polyethylene terephthalate copolymer of polyethylene terephthalate and a copolymer component,
the second polyester is polybutylene terephthalate or a polybutylene terephthalate copolymer of polybutylene terephthalate and a copolymer component,
a ratio of the first polyester to the second polyester is from 20:80 to 50:50 on a mass% basis, and
net intensities in pole figures satisfy formulas (1) and (2) below:
[Math. 1]

$$0.20 \leq I_{100}^{(60,0)}/I_{100}^{(60,90)} \leq 0.60 \quad \cdots \quad (1)$$

$$0.30 \leq I_{010}^{(50,0)}/I_{010}^{(50,90)} \leq 0.85 \quad \cdots \quad (2)$$

wherein, in X-ray diffraction measurement using Cu K$\alpha$ radiation, a diffraction peak appearing at $2\theta = 24.0 \pm 1.0°$ is attributed to (100) diffraction, and a diffraction peak appearing at $2\theta = 17.5 \pm 0.5°$ is attributed to (010) diffraction,
the pole figures are measured with $\alpha = 0°$ defined as a grazing angle at which a bisector of an angle between an incident X-ray and a reflected X-ray is parallel to a film plane, and
$\beta = 90°$ is defined as an in-plane rotation angle at which a maximum diffraction intensity is observed at $\alpha = 60°$ in the pole figure of the (100) diffraction,
$I_{100}^{(60,0)}$ is a net intensity at $\alpha = 60°$ and $\beta = 0°$ in a pole figure of intensity of the (100) diffraction,
$I_{100}^{(60,90)}$ is a net intensity at $\alpha = 60°$ and $\beta = 90°$ in the pole figure of intensity of the (100) diffraction,
$I_{010}^{(50,0)}$ is a net intensity at $\alpha = 50°$ and $\beta = 0°$ in a pole figure of intensity of the (010) diffraction, and
$I_{010}^{(50,90)}$ is a net intensity at $\alpha = 50°$ and $\beta = 90°$ in the pole figure of intensity of the (010) diffraction.

2. The polyester film according to Claim 1, wherein a sample standard deviation of a thickness measured in a direction of the incident X-ray at $\beta = 0°$ in the pole figures is 10% or less of an average film thickness.

3. The polyester film according to Claim 1 or 2, wherein the polyester film has at least one melting peak temperature of 200°C to 230°C.

4. A method for manufacturing a polyester film including a first polyester containing polyethylene terephthalate as a component and a second polyester containing polybutylene terephthalate as a component,

wherein the first polyester is polyethylene terephthalate or a polyethylene terephthalate copolymer of polyethylene terephthalate and a copolymer component,
the second polyester is polybutylene terephthalate or a polybutylene terephthalate copolymer of polybutylene terephthalate and a copolymer component,
the method comprising:

a non-stretched film forming step of extruding a resin composition containing the first polyester and the second polyester in a ratio of 20:80 to 50:50 on a mass% basis through a T-die using an extruder to obtain a non-stretched film; and
a longitudinally uniaxially stretched film forming step of longitudinally stretching the non-stretched film by using a longitudinal uniaxial stretching machine equipped with preheating rolls and one or more stretching rolls to obtain a longitudinally uniaxially stretched film,

wherein, in the longitudinally uniaxially stretched film forming step, a stretch ratio in the longitudinal stretching is 3.0 or more and 7.0 or less, and a final preheating roll in the longitudinal stretching has a temperature of 40°C or higher and 80°C or lower.

5. The method for manufacturing a polyester film according to Claim 4, comprising:

a heat-setting step of performing heat-setting by heating the longitudinally uniaxially stretched film that has undergone the longitudinally uniaxially stretched film forming step,

wherein, in the heat-setting step, a temperature of the longitudinally uniaxially stretched film resulting from the heating is at least 5°C higher than the temperature of the final preheating roll during stretching and at least 50°C lower than a melting point of the polyester film.

6. A method for manufacturing a polyester film including a first polyester containing polyethylene terephthalate as a component and a second polyester containing polybutylene terephthalate as a component,

wherein the first polyester is polyethylene terephthalate or a polyethylene terephthalate copolymer of polyethylene terephthalate and a copolymer component,

the second polyester is polybutylene terephthalate or a polybutylene terephthalate copolymer of polybutylene terephthalate and a copolymer component,

the method comprising:

a non-stretched film forming step of extruding a resin composition containing the first polyester and the second polyester in a ratio of 20:80 to 50:50 on a mass% basis through a T-die using an extruder to obtain a non-stretched film; and

a longitudinally uniaxially stretched film forming step of longitudinally stretching the non-stretched film by using a longitudinal uniaxial stretching machine equipped with preheating rolls and one or more stretching rolls to obtain a longitudinally uniaxially stretched film,

wherein, in the longitudinally uniaxially stretched film forming step, a stretch ratio in the longitudinal stretching is 3.0 or more and 7.0 or less, and a stretching temperature in the longitudinal stretching is 50°C or higher and 80°C or lower.

7. The method for manufacturing a polyester film according to Claim 6, comprising:

a heat-setting step of performing heat-setting by heating the longitudinally uniaxially stretched film that has undergone the longitudinally uniaxially stretched film forming step,

wherein, in the heat-setting step, a temperature of the longitudinally uniaxially stretched film resulting from the heating is at least 5°C higher than the stretching temperature and at least 50°C lower than a melting point of the polyester film.

8. A laminated metal sheet comprising the polyester film according to any one of Claims 1 to 3 laminated to at least one of a top surface and a bottom surface of a metal sheet having the top surface and the bottom surface.

9. The laminated metal sheet according to Claim 8, wherein a wide-angle X-ray diffraction spectrum of the laminated metal sheet satisfies formula (3) below:

[Math. 2]

$$I_{100}{}^{(90,0)}/I_{amorphous}{}^{(90,0)} \leq 1.5 \quad \cdots \quad (3)$$

wherein the wide-angle X-ray diffraction spectrum is measured by a $\theta$-$2\theta$ method using Cu K$\alpha$ radiation at a sample angle of $\alpha = 90°$ and $\beta = 0°$ in the pole figure,

$I_{100}{}^{(90,0)}$ is a net intensity of a (100) diffraction peak appearing at $2\theta = 24.0 \pm 1.0°$, and

$I_{amorphous}{}^{(90,0)}$ is a net intensity of an amorphous halo appearing at $2\theta = 20 \pm 5°$.

10. A method for manufacturing the laminated metal sheet according to Claim 8 or 9, comprising:

a thermocompression bonding step of laminating a preheated metal sheet and the polyester film together by thermocompression bonding using a laminating roll to form a thermocompression bonded body, and

a water-cooling step of cooling the thermocompression bonded body with water within 7 seconds after the thermocompression bonding,
wherein, in the thermocompression bonding step, the polyester film and the metal sheet are laminated together by thermocompression bonding after the metal sheet is preheated in a range of -20°C to +50°C relative to the melting point of the polyester film.

11. A laminated metal container comprising the laminated metal sheet according to Claim 8 or 9 as a material.

# FIG. 1

# FIG. 2

# FIG. 3

$\alpha = 0°$
$\beta = 0°$

$\alpha = 50°$ $\beta = 0°$
$\alpha = 50°$ $\beta = 90°$

6
8
10
12
14

$\alpha = 0°$
$\beta = 90°$

# FIG. 4

NON-STRETCHED FILM FORMATION — S101

LONGITUDINALLY UNIAXIALLY STRETCHED FILM FORMATION — S102

HEAT SETTING — S103

# FIG. 5

| | |
|---|---|
| THERMOCOMPRESSION BONDING | ～S201 |

↓

| | |
|---|---|
| WATER COOLING | ～S202 |

## INTERNATIONAL SEARCH REPORT

| | International application No. |
|---|---|
| | **PCT/JP2024/018026** |

### A.  CLASSIFICATION OF SUBJECT MATTER

**C08J 5/18**(2006.01)i; **B29C 55/06**(2006.01)i; **B32B 15/09**(2006.01)i; **B65D 65/40**(2006.01)i
FI:  C08J5/18 CFD; B29C55/06; B65D65/40 D; B32B15/09 Z

According to International Patent Classification (IPC) or to both national classification and IPC

### B.  FIELDS SEARCHED

Minimum documentation searched (classification system followed by classification symbols)

C08J5/18; B29C55/06; B32B15/09; B65D65/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.  DOCUMENTS CONSIDERED TO BE RELEVANT

| Category* | Citation of document, with indication, where appropriate, of the relevant passages | Relevant to claim No. |
|---|---|---|
| X | JP 2005-97560 A (TOYO BOSEKI KABUSHIKI KAISHA) 14 April 2005 (2005-04-14) | 1-3, 8-9, 11 |
| | claims, paragraphs [0001], [0002], [0049]-[0051], examples | |
| A | | 4-7, 10 |
| X | JP 2023-49184 A (UNITIKA LTD.) 10 April 2023 (2023-04-10) | 1-3, 8-11 |
| | claims, paragraph [0056], examples | |
| Y | | 10 |
| A | | 4-7 |
| X | JP 2003-200530 A (MITSUBISHI POLYESTER FILM CORP.) 15 July 2003 (2003-07-15) | 1-3, 8-9, 11 |
| | claims, paragraphs [0015]-[0015], [0041], [0052], examples | |
| Y | | 10 |
| A | | 4-7 |

☑ Further documents are listed in the continuation of Box C.    ☑ See patent family annex.

| | | | |
|---|---|---|---|
| \* | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/018026**

| C. | DOCUMENTS CONSIDERED TO BE RELEVANT | |
|---|---|---|
| Category* | Citation of document, with indication, where appropriate, of the relevant passages | Relevant to claim No. |
| X | JP 2009-279902 A (DAIWA CAN CO., LTD.) 03 December 2009 (2009-12-03) claims, paragraphs [0012]-[0032], examples | 1-3, 8-11 |
| A | | 4-7 |

Form PCT/ISA/210 (second sheet) (July 2022)

INTERNATIONAL SEARCH REPORT
Information on patent family members

International application No.

**PCT/JP2024/018026**

| Patent document cited in search report | | | Publication date (day/month/year) | Patent family member(s) | Publication date (day/month/year) |
|---|---|---|---|---|---|
| JP | 2005-97560 | A | 14 April 2005 | US 2007/0009750 A1 claims, paragraphs [0001], [0002], [0051]-[0053], examples | |
| JP | 2023-49184 | A | 10 April 2023 | (Family: none) | |
| JP | 2003-200530 | A | 15 July 2003 | (Family: none) | |
| JP | 2009-279902 | A | 03 December 2009 | (Family: none) | |

Form PCT/ISA/210 (patent family annex) (July 2022)

**EP 4 696 739 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10110046 A
- JP 6155660 A
- WO 2015012222 A
- JP 2009279902 A